# EUROPEAN PATENT APPLICATION

(11) **EP 1 365 267 A1**
(43) Date of publication of application: **26.11.2003**
(21) Application number: 02360134.7
(22) Date of filing: 29.04.2002
(51) Int. Cl.: G02B 6/35

(54) **An optical switch unit and a method therefore**

(71) Applicant: ALCATEL, 75008 Paris (FR)
(72) Inventor: Blau, Gerd, Dr., 70435 Stuttgart (DE)
(74) Representative: Rausch, Gabriele, Dr.

(57) **Abstract**

The invention relates to an optical switch unit (OFS) comprising at least one mirror device (MA1) with individually movable mirrors for switching a plurality of incoming optical signals from first optical ports (IF1, IF2, IF3, IF4) onto a plurality of second optical ports (OF1, OF2, OF3, OF4), wherein an optical collimator (ICL) is comprised, that is realised such, that incoming light beams after reflection by corresponding movable mirrors of said at least one array (MA1) are collimated towards a central region (P2) on an opposite mirror device (MA2), if the corresponding micro mirrors of said at least one array (MA1) are moved to be parallel to one plane, and a method therefore.

## Description

The invention relates to an optical switch unit according to the preamble of claim 1 and a method according to the preamble of claim 6 therefore.

Optical switch fabrics, for of so-called optical cross connects or for optical patch panels, based on a free spaced micro mechanical mirror architecture work by tilting said micro mirrors to establish optical paths between input fibres to selected output fibres. In a so-called z-type architecture, an array of input fibers or waveguides each with a collimator lens (often called collimated fibres) is arranged such, that each of the optical input signals falls onto a corresponding micro mirror element of a first set of mirrors, arranged in a first mirror array, that can direct the incident light rays by tilting the mirrors around one or two axes. A second array of collimated output fibers or waveguides is aligned to a second set of mirrors, arranged in a second mirror array. By precisely tilting the corresponding pair of mirrors, the light ray of an arbitrary input fibre can be directed to a selected output fibre establishing a corresponding optical path.

The light beams in the above described arrangement are reflected forming z-like optical paths. The use of so-called z-design fibre switches requiring two arrays of micro-mirrors leads to inhomogeneous requirements on the tilt angles of different micro mirrors. The necessary variations in the tilt angles for mirrors closer to the edge of said array are substantially larger than the one for mirrors located in the vicinity of the centre of the array.

The maximum tilt angle of mirrors within an array is the limiting factor of maximum achievable port count and scalability of a slab or free space waveguide or fiber switch. The fabrication of tilt mirrors with large tilt angles can lead to high actuation voltages, an unstable mirror and a complex mirror positioning control mechanism.

One possible solution to limit the maximum tilt angle of a free space fibre switch is to decrease the distance between the two arrays. But this will require, due to an increased propagation length and beam (or waveguide mode) divergence, larger beams (or waveguide modes) and therefore larger mirrors.

The object of the invention is to minimise the maximum tilt angle of the micro mirrors of a z-design fibre switch with a maximum port count, i.e. a maximum number of input and output ports.

This object is achieved in accordance with the invention by an optical switch unit according to the teaching of claim 1 and a method according to the teaching of claim 6.

The basic idea of this invention consists in modifying the direction of input (light) rays or (light) beams in a free space optical switch between a first mirror device and an opposite mirror device, wherein at least a first mirror device is realized as an array of movable micro mirrors. The parallel incident beams on said first mirror device are re-directed to one region or point on the center of the opposite mirror device instead of irradiating in parallel, if the micro mirrors of said first mirror device are relaxed. Accordingly, a collimator for collimating the beams is positioned between said two mirror devices.

Further developments of the invention can be gathered from the dependent claims and the following description.

In the following the invention will be explained further making reference to the attached drawings in which:
- Fig.1: shows an exemplary Z-type arrangement of an optical fibre switch unit according to the prior art,
- Fig.2: shows an exemplary Z-type arrangement of an optical fibre switch unit according the invention and
- Fig.3: shows a top view on an exemplary micro mirror with a centre point for beam incidence of an optical fibre switch unit according the invention.

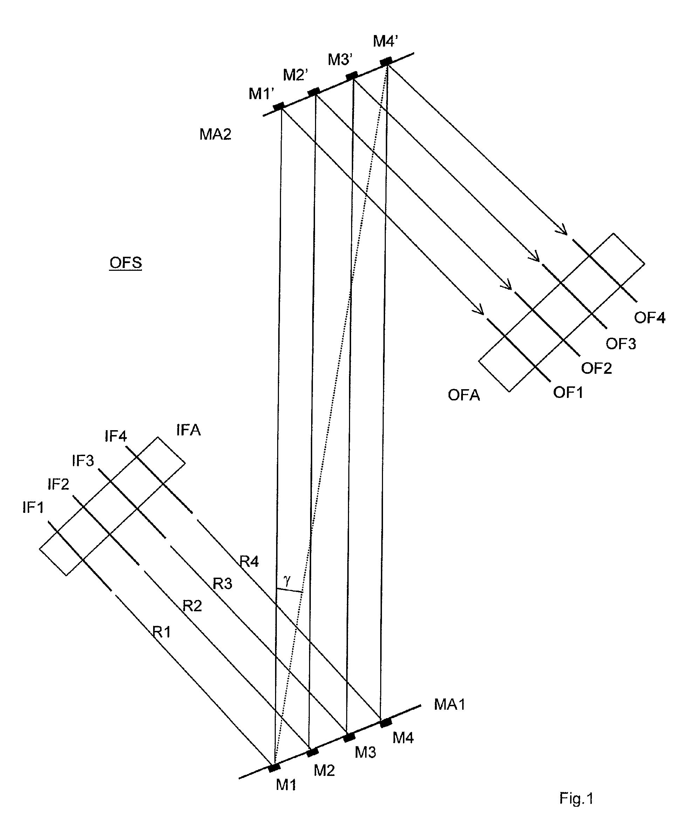

Fig.1a schematically shows a Z-type optical switch OFS for switching n x n optical paths between n input ports, especially input fibres or waveguides IF1- IF4, n output ports OF1- OF4 according to the prior art. In the following, said ports will be regarded as fibre ends. For the shown example, n equals 16, arranged in 4 lines and four rows. In Fig.1, a top view on the fibre switch OFS is shown, perpendicular to the light rays described in the following; for simplicity reasons only four input fibres IF1- IF4 (one row), four output fibres OF1- OF4 and accordingly four light rays R1- R4 between said input and output fibres are shown. The input fibres IF1- IF4 and the output fibres OF1- OF4 are bundled into an input fibre array IFA and into an output fibre array OFA respectively, each comprising an array of collimating lenses for optical adaptation between the fiber and the free space beam. The input fibre array MA1 generates a set of parallel n light rays R1- R4 out of the optical signals of the respective input fibres IF1- IF4 to be incident on each one of n micro mirrors M1, M2, M3 or M4 of a first micro mirror array MA1. Said micro mirrors are shown each in a relaxed state, thus reflecting the incident light in parallel to each a corresponding further micro mirror M1', M2', M3' or M4' of a second micro mirror array MA2. Said n further micro mirrors are shown too in each a relaxed state, thus reflecting the incident light further in parallel to each a collimating lens of the n output fibres OF1- OF4 of said output fibre array OFA.

The mirrors of the micro mirror arrays MA1 and MA2 can be independently tilted to redirect any collimated input beam to any output fiber. In the above described example, the first input fibre F1 is optically connected to the first output fibre over the first micro mirror M1 and the first further micro mirror M1', connecting thus the first input fibre FI1 with the first output fibre OF1. For changing the optical connections, corresponding pairs of micro mirrors have to be tilted by certain angles. E.g., to connect the first input fibre IF1 to the fourth output fibre OF4, the first micro mirror M1 of the first micro mirror array MA1, as well as the corresponding fourth mirror M4' of the second micro mirror array MA2 have to be tilted by an angle γ shown in Fig.1.

Each micro mirror must be able to redirect any incoming beam to an arbitrary output fiber, as e.g. required for an optical cross connect. This leads to inhomogeneous requirements on the tilt angles of different micro mirrors. The necessary variations in the tilt angles for mirrors closer to the edge of said array are substantially larger than the one for mirrors located in the vicinity of the centre of the corresponding micro mirror array.

The worst case condition is fulfilled, when a beam incident on the edge of the first micro mirror array MA1 has to be redirected to the opposite edge of the second micro mirror array MA2. The maximum tilt angle of mirrors within an array is the limiting factor of maximum achievable port count n and scalability of the switch.

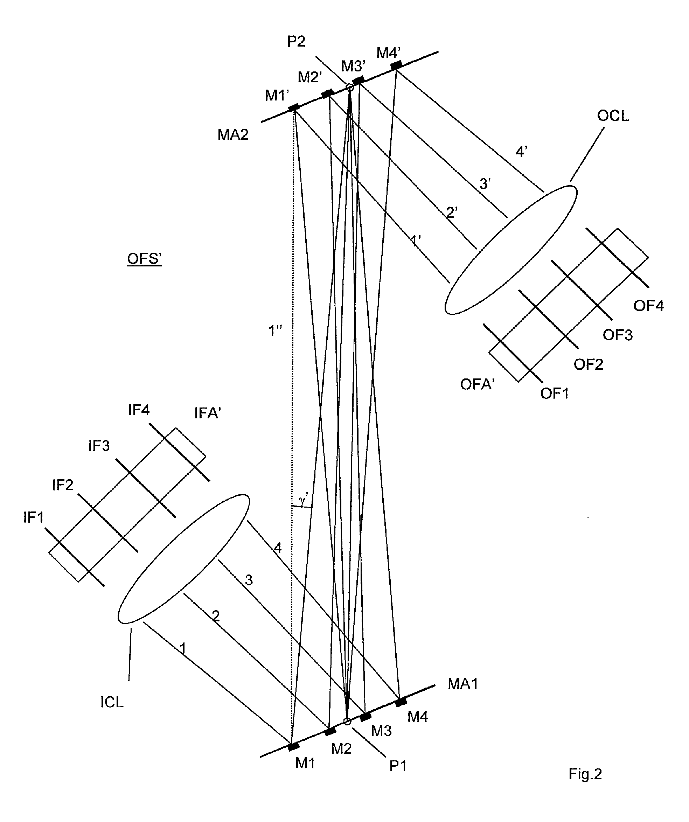

Fig. 2 shows an alternative Z-type optical fibre switch unit OFS' with collimators for reduction of maximum micro mirrors tilt angles according the invention.

In principle, Fig.2 shows a similar Z-type arrangement as shown in Fig.1 for switching n x n optical paths between n input and n output fibres. The input fibres IF1- IF4 are grouped into a modified input fibre array IFA' with an enhanced fibre grid compared to the input fibre array IFA of Fig.1 Accordingly, the n output fibres OF1- OF4 are grouped into a modified output fibre array OFA' with an fibre grid according to the input fibre grid. Further, the first micro mirror array MA1 and the second micro mirror array MA2 are shown at similar positions according to Fig.1. As for Fig.1, for simplicity reasons only four input fibres IF1- IF4 and four output fibres OF1- OF4 are shown. Additionally to Fig.1, an input collimator ICL is positioned between the modified input fibre array IFA' and the first micro mirror array MA1 and an output collimator OCL is positioned between the second micro mirror array MA2 and the output fibre array OFA.

The generated set of parallel n light rays emitted by the input fibres IF1- IF4 are directed by the input collimator ICL to be incident on each corresponding micro mirror M1, M2, M3 or M4 of the first micro mirror array MA1 as non parallel rays. Said micro mirrors, in relaxed state, redirect the incident light rays 1- 4 to a second centre region (centre point) P2 of the centre of the second micro mirror array MA2. The same principal applies for the opposite micro mirror array MA2: the output collimator OCL is realised such, that opposite light rays 1'- 4', that would be emitted by the output fibres OF1- OF4 are redirected to fall onto a first centre region (centre point) P1 of the centre of the first micro mirror array MA1. Said input and output collimators ICL and OCL e.g. can be realised each by a set of optical lenses or any other set of refractive, diffractive or reflective optical elements.

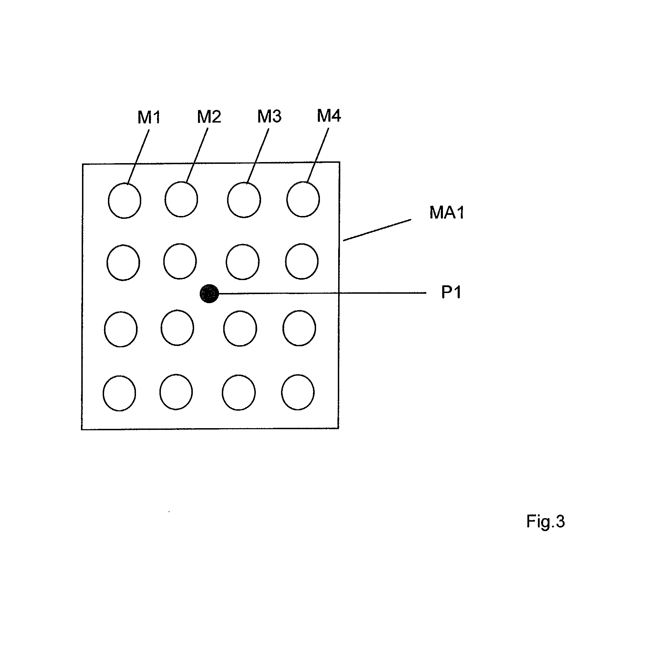

For explanation of the centre region P1 and P2, Fig.3 by way of example shows the quadratic surface of the first micro mirror array MA1 with 4 x 4 optical mirrors arranged 4 rows of each for micro mirrors, of which the first row with the corresponding micro mirrors M1- M4 are shown. Further the centre region P1 is shown in the centre of said array MA1. The centre region in ideal case equals just the centre point of said array MA1. In two-dimensional designs, i.e. in switches with one dimensional arrays, the centre regions P1 and P2 may show a line shape.

In contrast to Fig.1, the mirrors of Fig.2 in a relaxed position, i.e. when the surface of the mirrors are all parallel on a single plane, do not provide optical connections between input and out fibres. The mirrors have to be tilted in order to establish an optical connection. In further contrast to Fig.1, each mirror has then the same and maximum tilt range of around the relaxed position. By way of example, Fig 2 shows a switched first light ray 1'' directed from the first mirror M1 to the opposite first mirror M1', if the first mirror is tilted by an angle γ', that is significantly smaller than the angle γ shown in Fig.1.

Generally, instead of m x m arrays, any other format, e.g. k x m arrays with k ≠ m can be used according to the invention. Especially a so-called two-dimensional design, k being equal to 1 can be easily provided with optical collimators ICL and OCL according to the invention. In this case, the optical device can be realized using a set of lenses or any diffractive, refractive or reflective optical element. It is especially possible to realize the optical function using waveguide technology, e.g. two dimensional concave mirror if light propagating between the optical devices are so-called slab waveguide modes.

This design has a considerable advantage compared to a standard design. In a standard design, all incoming and outgoing beams are parallel. The required angular range for the mirrors are increasing with the distance from the centre. According to the invention, the required angular range are the same for all mirrors. Compared to a maximum angular range of +/- θ for both dimensions of the array for the outer mirrors in Fig.1 the mirrors according to the invention only exhibit a maximum angular range of +/- θ/2. Usual mirror arrays are fabricated using Micro Electro Mechanical Systems (MEMS) technology. These MEMS tilt or movable mirrors have all the same tilt range. As a result, the standard design requires movable mirrors with the double angular range. Thus, according to the invention, the number m of one row of fibres can be doubled or half the number n of input/output fibers. E.g. in a three dimensional fiber switch with input fibers arranged in a two dimensional array leading to m x m input fibers or input ports, the doubling of the number m therefore leads to a fourfold total number of achievable ports.

Alternatively to the above described embodiment with a z-design architecture with two arrays of movable micro mirrors MA1 and MA2, the invention can be realized in an optical switch with only one array of movable micro mirrors. In such a design, an array of mixed collimated input and output fibres, said array of micro mirrors and a fixed auxiliary mirror are arranged such, that the light ray from arbitrary input ports fall directly to corresponding micro mirrors. Said micro mirrors reflect the incident light rays via the auxiliary mirror each to a selected further micro mirror, that each re-direct said light back to a corresponding output port. According to the inventive method, a collimator is positioned between said micro mirror array and the auxiliary mirror.

As example for the advantageous application of the invention, the same type of MEMS mirror array that is limited to be used in a 256 x 256 port optical cross connect (OXC) in a standard optical design can be used in a 1024x1024 port OXC when the method according to the invention is applied.

## Claims

1. An optical switch unit (OFS) comprising at least one mirror device (MA1) with individually movable mirrors (M1, M2, M3, M4) for switching a plurality of incoming optical signals from first optical ports (IF1, IF2, IF3, IF4) onto a plurality of second optical ports (OF1, OF2, OF3, OF4), **characterised in, that** an optical collimator (ICL) is comprised, that is realised such, that incoming light beams after reflection by corresponding movable mirrors of said at least one mirror device (MA1) are collimated towards a central region (P2) on an opposite mirror device (MA2), if the corresponding micro mirrors of said at least one array (MA1) are moved to be parallel to one plane.

2. An optical switch unit (OFS) according to claim 1, **characterised in, that** said opposite mirror device (MA2) also comprises movable mirrors (M1', M2', M3', M4') to form a so-called Z-design optical switch unit and that a second optical collimator (OCL) is comprised, that is realised such, that light beams incident from output ports (OF1, OF2, OF3, OF4) are collimated towards a further central region (P1) on the opposite mirror device (MA1).

3. An optical switch unit (OFS) according to claim 1, **characterised in, that** the opposite mirror device (MA2) is realised as an auxiliary fixed mirror for reflecting received light beams from arbitrary micro mirrors (M1, M2, M3, M4) of said first mirror device (MA1) to each an arbitrary micro mirror (M1, M2, M3, M4) of the same mirror device (MA1).

4. An optical switch according to claim 1 **characterised in, that** said at least one mirror device (MA1) consists of an array of micro mirrors, and that the optical collimator (ICL) is realised such, that the corresponding central region (P2) is approximately a point.

5. An optical switch according to claim 1 or 2, **characterised in, that** if said opposite mirror device (MA2) comprises a set of micro mirrors (M1', M2', M3', M4') said central region (P2) does not include any surface of said micro mirrors.

6. A method to reduce the maximum tilt angle of individually movable micro mirrors (M1, M2, M3, M4) of at least one mirror device (MA1) for switching a plurality of incoming optical signals from first optical ports onto a plurality of second optical ports, **characterised in, that** incoming light beams after reflection by corresponding movable mirrors of said at least one array (MA1) are collimated towards a central region (P2) on an opposite mirror device (MA2), if the corresponding micro mirrors of said at least one array (MA1) are parallel to one plane.
